Europäisches Patentamt

European Patent Office

Office européen des brevets

(19)

(11) Numéro de publication : **0 480 984 B1**

## (12) FASCICULE DE BREVET EUROPEEN

(45) Date de publication du fascicule du brevet :
**15.09.93 Bulletin 93/37**

(51) Int. Cl.$^5$ : **F16M 11/04,** B64G 1/00,
G02B 23/16

(21) Numéro de dépôt : **90910783.1**

(22) Date de dépôt : **03.07.90**

(86) Numéro de dépôt international :
**PCT/FR90/00498**

(87) Numéro de publication internationale :
**WO 91/00976 24.01.91 Gazette 91/03**

(54) **MECANISME DE REGLAGE FIN DE L'ORIENTATION ET/OU DE LA POSITION D'UNE CHARGE UTILE.**

(30) Priorité : **06.07.89 FR 8909098**

(43) Date de publication de la demande :
**22.04.92 Bulletin 92/17**

(45) Mention de la délivrance du brevet :
**15.09.93 Bulletin 93/37**

(84) Etats contractants désignés :
**DE ES GB IT**

(56) Documents cités :
**EP-A- 0 269 925**
**FR-A- 2 517 019**
**GB-A- 1 514 687**
**US-A- 4 667 415**

(56) Documents cités :
**Journal of Guidance, Control and Dynamics,
vol. 8, no. 1, janvier-février 1985, (New York,
US), J. Broquet et al.: "Antenna pointing for
large communications satellites", pages
71-77**
**L. Paratte: "Antennae pointing mechanisms
handbook", section APM no. 7, mai 1988,
ESTEC, (Noordwijk, NL) pages 1-2**

(73) Titulaire : **AGENCE SPATIALE EUROPEENNE
8-10, rue Mario Nikis
F-75738 Paris Cedex 15 (FR)**

(72) Inventeur : **PANIN, Fabio
Hoofdstraat 37
NL-2235 GB Valkenburg (NL)**

(74) Mandataire : **Orès, Bernard et al
Cabinet ORES 6, Avenue de Messine
F-75008 Paris (FR)**

EP 0 480 984 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention est relative à un mécanisme de réglage fin de l'orientation et/ou de la position d'une charge utile capable de faire subir à celle-ci de très faibles rotations et/ou déplacements.

Dans l'état de la technique des rotations et/ou des déplacements de faibles valeurs d'une charge utile sont obtenues :
- soit par l'utilisation de systèmes de liaison par levier, aptes à réduire les déplacements (classiques sont les liaisons à quatre leviers, ou même à six leviers pour les systèmes plus complexes) ;
- soit par l'emploi de pièces en contact qui se déplacent l'une par rapport à l'autre sur des surfaces obliques par rapport aux axes de référence du mécanisme de réglage ;
- soit encore par l'emploi de membranes planes, comportant des zones de découpage qui modifient leur propriété de déformation.

Dans l'ouvrage "ANTENNA POINTING MECHANISMS HANDBOOK" (L. PARATTE, Mai 1988-ESTEC W.P.1517) on décrit ce qui peut être considéré, à l'état actuel de la technique, comme étant le meilleur mécanisme de pointage fin d'antenne actuellement disponible permettant de très petites rotations de la charge utile avec une précision de 2 millièmes de degrè dans une plage de $\pm$ 1,5 degrés, ce mécanisme étant connu sous la référence MATRA APM-PA.

Toutefois, les mécanismes de règlage fins de l'orientation d'une charge utile ne permettent pas les réglages grossiers et sont essentiellement destinés à fonctionner à l'intérieur de plages de positionnement fixes et prédéterminées.

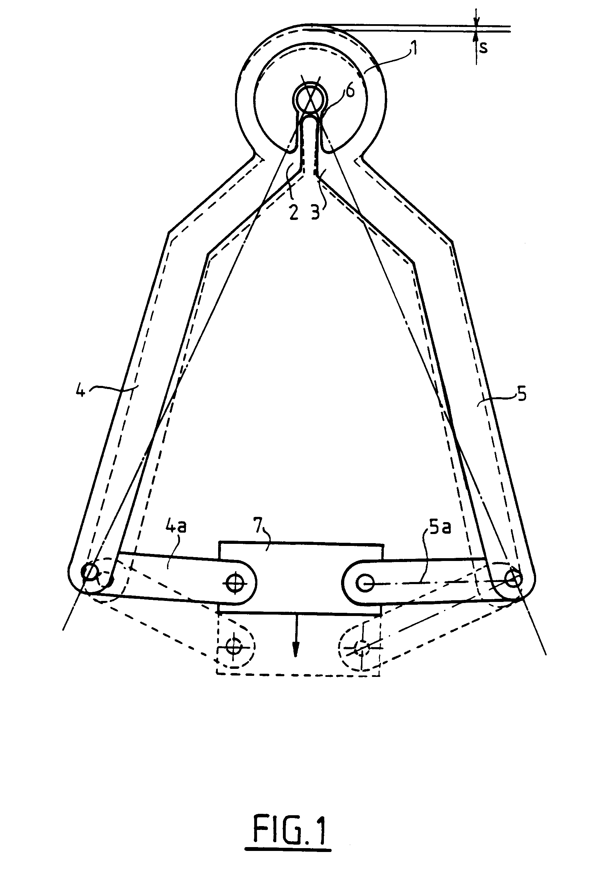

On connaît également un mécanisme de déplacement précis d'une charge utile, développé par DORNIER, en Allemagne Fédérale. Ce mécanisme est illustré à la figure 1 annexée à la description de la présente invention. On peut remarquer qu'il comporte un élément élastique à symétrie circulaire 1 constitué par une bague élastique discontinue (ou ouverte), dont les extrémités opposées inférieures 2 et 3 sont reliées, d'une part, à deux leviers d'actionnement 4 et 5, qui sont inclinés par rapport à la verticale et dont la ligne d'action passe par le centre de la bague élastique 1, et, d'autre part, à un ressort à lames 6 fixé à un axe disposé dans le centre de la bague 1 et reliant entre elles les deux extrémités 2 et 3, de manière à diriger, notamment vers le bas, la déformation de la bague 1 lorsque l'on actionne les leviers 4 et 5 dans le sens de les rapprocher : cela est obtenu dans le dispositif DORNIER en agissant sur une pièce axiale 7 (dans le sens illustré par la flèche), qui est reliée aux leviers 4 et 5 par deux leviers auxiliaires 4a et 5a. De cette manière, on obtient une déformation de la bague élastique 1, dont le diamètre diminue suivant la verticale d'une quantité **s**, comme illustré à la figure 1, qui montre que le sommet de la bague 1 subi un affaissement suite à l'actionnement des deux leviers, à savoir une déformation vers le bas, compte tenu de la contrainte imposée par le ressort à lames 6 qui dirige justement la déformation dans le sens précité.

Toutefois, il y a lieu de noter que dans le mécanisme DORNIER :
- ne sont autorisés que des mouvements de translation, aucune rotation n'étant donc possible ;
- la déformation de la bague circulaire ouverte, qui est obtenue à l'aide de leviers d'actionnement, résulte du rapprochement -contrôlé par le ressort à lames- des deux extrémités opposées de la bague,
- l'effort de déformation n'est pas appliqué directement sur la bague élastique, mais par l'intermédiaire d'un système de leviers, qui est destiné à assurer une première réduction des déplacements.

La présente invention s'est donc donné pour but de pourvoir à un mécanisme de réglage fin de l'orientation et/ou de la position d'une charge utile qui répond aux nécessités de la pratique mieux que les mécanismes du même type et visant au même but antérieurement connus, notamment en ce que :
- il permet de transformer des déplacements linéaires en rotations ou roto-translations ;
- la rotation de la charge utile peut être rendue aussi petite que l'exigent les besoins de la pratique, en ce sens que, au moins théoriquement, il n'existe pas de limite inférieure pour la rotation de la charge, les limitations étant en pratique uniquement liées à des contraintes d'ordre technologique ;
- il permet également de réaliser un réglage grossier de la rotation de la charge utile, qui s'ajoute à la possibilité de réglage fin exceptionnel propre du mécanisme selon l'invention ;
- il ne présente pas de battements, ni de friction, ce qui lui confère une plus grande fiabilité de fonctionnement et une moindre sensibilité aux conditions de l'environnement, par rapport aux dispositifs connus ;
- sa conception mécanique est extrémement simple ;
- sa masse est relativement faible ;
- il est très facile de le relier à la charge utile, dont l'orientation doit être obtenue par réglage fin de sa rotation ;
- il présente une grande versatilité d'emploi ;
- il n'existe aucun point singulier à l'intérieur de l'intervalle de réglage, et ce contrairement à la plupart des mécanismes de réglage de l'orientation et/ou de la position actuellement existants, qui présentent

EP 0 480 984 B1

des positions qui sont soit difficiles soit impossibles à atteindre ou pour lesquelles la cinématique est critique ;

- il se prête à une grande liberté de conception, grâce à l'existance de plusieurs paramètres dont le choix affecte directement la construction du mécanisme.

La présente invention à pour objet un mécanisme de réglage fin de l'orientation et/ou de la position d'une charge utile, comprenant :

- un moyen de support de la charge,
- des moyens élastiquement déformables à symétrie circulaire à l'état non déformé,
- des moyens de déformation de ces moyens élastiques,
- des moyens de connexion du moyen de support de la charge aux moyens élastiques, permettant de communiquer les déformations de ces derniers au moyen de support et donc à la charge,

lequel mécanisme est caractérisé en ce que :

- les moyens élastiques sont constitués par au moins une bague continue ayant un rayon, une épaisseur radiale et une largeur axiale prédéterminés,
- le moyen de support de la charge est disposé, par rapport à la bague, de manière à transformer les déformations de celle-ci en rotations ou roto-translations de ce moyen de support,
- les moyens de déformation de la bague, qui font passer celle-ci de l'état non déformé à l'état déformé, sont aptes à appliquer directement un effort de déformation à cette bague, dirigé vers l'extérieur, contemporanément en deux points diamétrale opposés de la bague définissant une ligne d'action diamétralement de ses moyens de déformation, ladite bague présentant des points singuliers qui restent sensiblement fixes lorsqu'elle passe de l'état non déformé à l'état déformé et dont la distribution sur la bague est fonction de l'orientation de la ligne d'action diamétrale des moyens de déformation par rapport à un diamètre de référence de la bague passant par point d'emplacement desdits moyens de connexion sur celle-ci,
- il comporte en outre des moyens de variation, dans des limites préfixées, de l'orientation de la ligne d'action diamétrale des moyens de déformation de la bague, et donc de variation de la distribution desdits points sensiblement fixes de cette bague, en sorte que le point d'emplacement des moyens de connexion coïncide avec des positions variables entre des positions voisines et des positions éloignées desdits points sensiblement fixes de la bague, des déformations de cette bague correspondant à ces positions et permettant un réglage, respectivement fin et grossier, du moyen de support de la charge utile et donc de cette dernière.

Conformément à l'invention, les moyens de déformation sont constitués par un actionneur à double effet disposé à l'intérieur de la bague élastique, en sorte qu'il prend appui contre deux points diamétralement opposés de la surface interne de la bague.

Selon un mode de réalisation préféré du mécanisme de réglage conforme à l'invention, les moyens élastiquement déformables sont constitués par deux bagues, à l'intérieur de chacune desquelles est disposé un actionneur du type susdit, ces deux actionneurs étant reliés à une structure fixe par l'intermédiaire d'une liaison rigide qui rend solidaires entre eux les deux actionneurs, le moyen de support de la charge étant constitué par une plaque fixée par deux côtés opposés aux deux bagues.

Selon un mode de réalisation avantageux du mécanisme de réglage conforme à l'invention, les moyens élastiquement déformables sont constitués par une bague unique, à l'intérieur de laquelle est disposé l'actionneur précité, le moyen de support étant constitué par une plaque dont un côté est fixé à la bague, alors que l'autre côté pivote, par rapport à une structure fixe, autour d'une articulation flexible.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés, dans lesquels :

- la figure 1 décrit un mécanisme de réglage précis des déplacements d'une charge utile utilisé dans l'Art antérieur et décrit plus haut ;
- la figure 2 illustre schématiquement un premier mode de réalisation du mécanisme de réglage conforme à l'invention ;
- la figure 3 illustre la disposition relative entre les moyens de connexion du moyen de support de la charge utile et le point d'application des efforts de déformation visant à obtenir une possibilité de réglage grossier ;
- la figure 4 illustre, également schématiquement, un deuxième mode de réalisation du mécanisme de réglage selon l'invention ;
- la figure 5 illustre schématiquement un détail de la fixation de la plaque de support de la charge utile, qui n'a pas été représentée à la figure 4 pour des raisons de simplification du dessin ;

3

- la figure 6 illustre schématiquement, en pointillé, la configuration à l'état déformé de la bague du mécanisme illustré à la figure 2 ou des bagues du mécanisme illustré à la figure 4, la bague à l'état non déformé étant représentée en trait plein ;
- les figures 7 et 8 illustrent schématiquement deux modes d'action du mécanisme représenté aux figures 4 et 5 ;
- les figures 9 à 11 sont de représentations statiquement équivalentes de ou des bague(s) du mécanisme conforme à l'invention utilisés en vue de l'application du principe des travaux virtuels.

Il doit être bien entendu, toutefois, que ces dessins et les parties descriptives correspondantes, sont donnés uniquement à titre d'illustration de l'objet de l'invention, dont ils ne constituent en aucune manière une limitation.

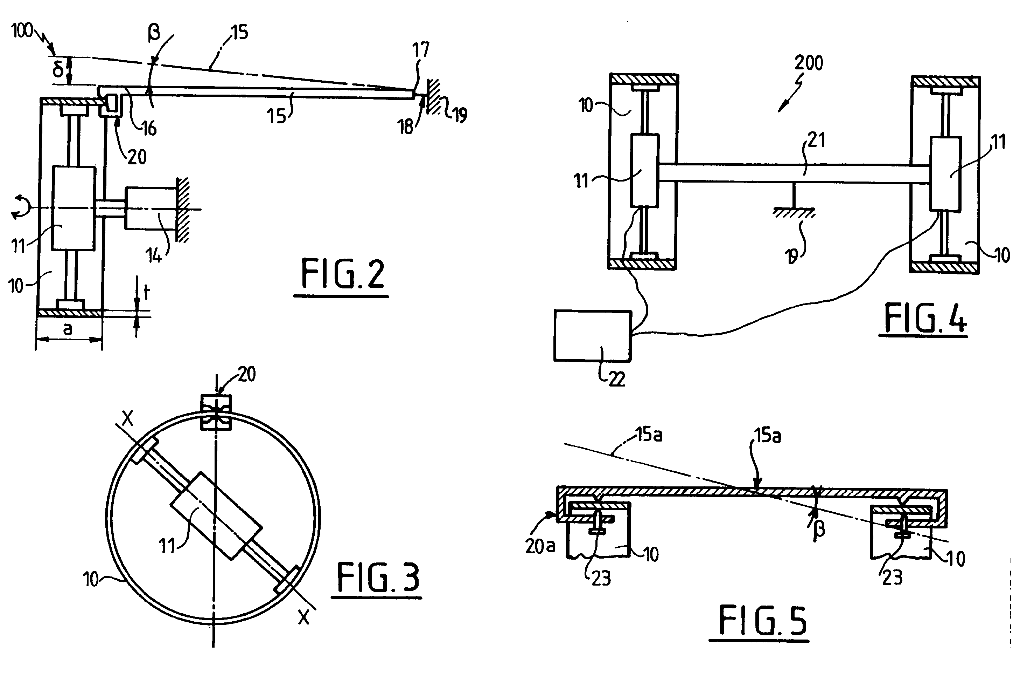

Le mécanisme de réglage illustré à la figure 2 est désigné sous la référence numérique 100 et comporte une bague déformable élastiquement 10 (réalisée par exemple en acier spécial pour ressort ou en acier inoxydable), à l'intérieur de laquelle est disposé un actionneur 11 à double effet, exercé par les éléments 12 et 13 dont les axes sont alignés et les sens d'action opposés : bien entendu, la représentation de l'actionneur est très schématique et vise essentiellement à illustrer le principe de fonctionnement. Le type d'actionneur adopté en pratique dépend de l'application visée : à cet effet, on peut utiliser des organes de commande de type électromagnétique ou des moteurs pas-à-pas, pour les applications les plus grossières, ou encore des dispositifs piezoélectriques pour les applications les plus précises.

Une plaque 15 est fixée par une de ces extrémités 16 à la bague élastique 10, alors que son extrémité opposée 17 est reliée de façon pivotante à la structure fixe 19 par l'intermédiaire d'une articulation flexible 18 (par exemple réalisée sous forme d'une membrane, ou d'une plaquette, étroite présentant une rigidité à la flexion très faible, alors que sa rigidité axiale est très élevée).

En traits mixtes est illustrée la position de la plaque 15 suite à la déformation de la bague 10. Il est facile de vérifier que le mécanisme 100 illustré à la figure 2 permet de transformer les déformations linéaires $\delta$ de la bague élastiquement déformable 10 en rotations d'un angle $\beta$ de la plaque 15.

La disposition relative de l'actionneur et des moyens de fixation 20 de la plaque 15 à la bague 10, (suivant des critères qui seront illustrés par la suite) -notamment réalisés sous forme de clip, comme illustré schématiquement aux figures 2 et 3-, permet d'effectuer un réglage fin ou grossier selon les besoins. Ceci peut être obtenu en faisant tourner la bague avec son actionneur, de façon à changer la ligne d'action de ce dernier par rapport à l'emplacement de la plaque, comme illustré à la figure 3, par exemple à l'aide d'un moteur pas-à-pas 14 (cf la figure 2) qui entraîne solidairement l'actionneur et la bague. Bien entendu, il faut prévoir des moyens de connexion permettant que la bague glisse librement par rapport à la plaque, ce qui techniquement peut être obtenu de différentes manières.

Le dispositif 200, illustré à la figure 4, utilise deux bagues 10, du type précité utilisé dans le mécanisme 100 de la figure 2 : pour cette raison, on désigne sous les mêmes références les éléments ayant trait aux deux bagues de la figure 4.

On peur remarquer que les actionneurs des deux bagues 10 sont reliés entre eux par une tige rigide 21 qui, à son tour, est reliée à la structure fixe 19 illustrée schématiquement -comme d'ailleurs dans la figure 2- par le symbole de terre. Le bloc 22 illustre un dispositif électronique de commande de l'actionneur 11.

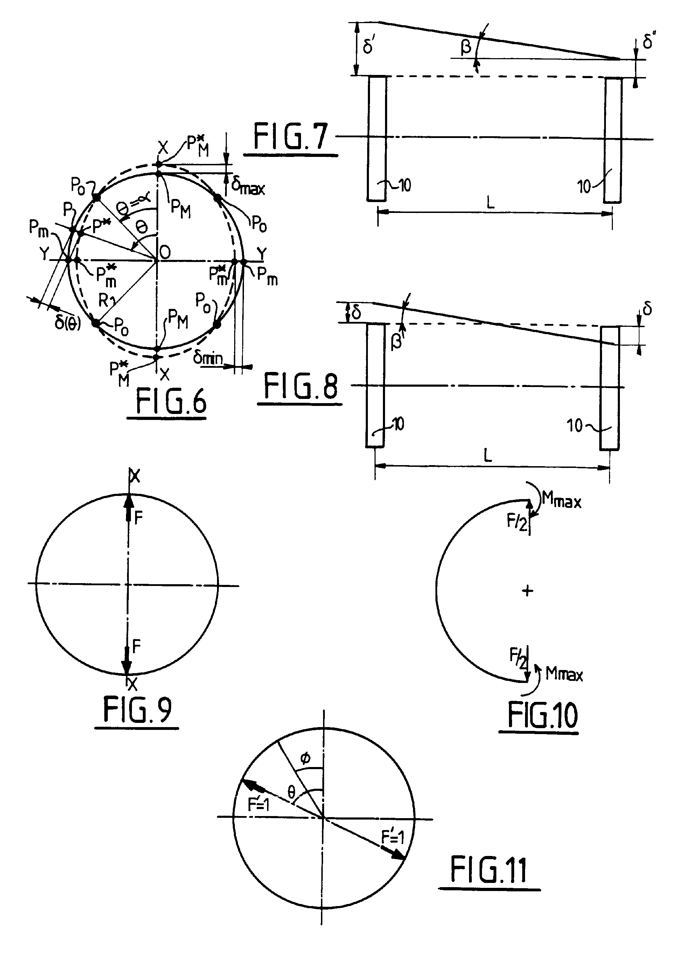

La plaque de support 15a de la charge utile (qui n'a pas été représentée à la figure 4 pour des raisons de simplification du dessin) est illustrée schématiquement à la figure 5 pour montrer les moyens de connexion 20a qui sont utilisés pour fixer la plaque 15a par ses deux extrémités opposées aux deux bagues 10. Il est facile de vérifier que dans le cas du dispositif 200 les déformations $\delta'$, $\delta''$ des deux bagues 10 (cf la figure 7) provoquent un mouvement de roto-translation de la plaque de support 15a, qui peut se réduire à un simple mouvement de rotation de celle-ci d'un angle $\beta$ (cf la figure 8) si les deux bagues 10 subissent les mêmes déformations, mais en sens opposés.

Bien entendu, également avec le mécanisme 200 sont possibles des réglages fins ou grossiers selon la position des moyens de fixation 20a du plateau de support de la charge aux deux bagues (la référence 23 représente des vis de fixation).

Ci-après on précise le mode d'action du mécanisme de réglage selon l'invention, ce qui permettra de mieux en apprécier l'originalité. On indique avec $\theta$ l'angle définissant la position par rapport à l'axe x-x de l'actionneur 11, d'un point générique P de la bague élastiquement déformable 10 à l'état non déformé et du point correspondant P* de la bague à l'état déformé. Le point P* est donc disposé sur la même ligne reliant le centre 0 de la bague au point P. La déformation $\delta$, qui est fonction de l'angle $\theta$, est donc définie géométriquement par : 0P* - 0P (cf la figure 6) et aura un signe positif ou négatif. La valeur maximale (positive) $\delta_{max}$ de la déformation est subie par les points $P_M$ diamétralement opposés, qui sont situés sur l'axe x-x de l'actionneur et qui se déplacent jusqu'à occuper la postion $P^*_M$, alors que la valeur minimale (négative) $\delta_{min}$ est subie par les points $P_m$, eux aussi diamétralement opposés, qui sont situés sur l'axe y-y perpendiculaire à l'axe x-x de l'actionneur et qui se déplacent jusqu'à occuper la position P*$_m$, en sorte que (cf la figure 6) :

$$\delta_{max} = OP*_M - OP_M$$
$$\delta_{min} = OP*_m - OP_m.$$

Il est facile de vérifier qu'il existe des points, désignés sous la référence P$_o$ à la figure 6, qui -au moins en première approximation- ne subissent aucun déplacement : pour ces points il est donc P*$_o$ = P$_o$ (le rayon ne subit aucune variation).

Le développement analytique qui suit montre que les déformations de la bague élastique sont très faibles pour les points de celle-ci situés à proximité des points P$_o$, dont la position angulaire est définie par l'angle caractéristique θ = α.

Or, c'est justement cette condition qui est utilisée dans le cadre de la présente invention pour effectuer des réglages fins d'orientation et/ou de position d'une charge utile, en fixant les moyens de connexion, 20 ou 20a, de la plaque de support de cette charge, 15 ou 15a, en des points très voisins des points P$_o$.

Par contre, leur fixation en des points relativement éloignés des points P$_o$ permet d'effectuer des réglages grossiers.

Ces conditions, auxquelles satisfait le mécanisme selon l'invention, peuvent être vérifiées sur la base de l'expression analytique de la déformation δ du diamètre de la bague élastique en fonction de l'angle θ, ainsi que des propriétés de la bague et de l'effort de déformation de celle-ci.

Cette fonction δ(θ) peut être obtenue en faisant recours à la théorie classique de l'élasticité (cf en particulier l'ouvrage de S. TIMOSHENKO, "Strength of Materials", Van NOSTRAND Co., New York).

Dans ce qui suit on fait l'hypothèse que les efforts de cisaillement soient négligeables pour des raisons de simplicité. Cette hypothèse est justifiée par le type de section adoptée pour la bague, cette section étant rectangulaire et satisfaisant contemporanément aux conditions suivantes :

$$t < a/5$$
$$t < R/30$$

t étant l'épaisseur radiale de la bague, a sa largeur axiale et R son rayon.

Si on indique par F l'effort de déformation appliqué par l'actionneur précité, il est possible de représenter schématiquement la bague comme illustré à la figure 9. Dans la figure 10, qui est l'équivalent statique de la figure 9, on fait apparaître le moment de flexion maximal M$_{max}$, qui est donné (cf une fois de plus TIMOSHENKO) par l'expression suivante :

$$M_{max} = - FR/\pi,$$

alors que la distribution du moment de flexion M en fonction de l'angle θ est donnée par :

$$M (\theta) = FR (\text{sen } \theta/2 - 1/\pi).$$

La détermination de la déformation δ(θ), suivant le diamètre générique défini par l'angle θ, peut être obtenue en appliquant le principe des travaux virtuels à la bague soumise à l'action d'un effort de déformation F' unitaire, comme illustré à la figure 11.

Pour cette structure fictive, la distribution du moment de flexion M' est donnée par :

$$M' = 0 \text{ pour } \phi < \theta$$
$$M' = 1.R. \text{ sen } (\phi - \theta) \text{ pour } \theta < \phi < \theta + \pi$$
$$M' = 0, \text{ pour } \phi > \theta + \pi.$$

Or, l'application du principe des travaux virtuels permet d'écrire :

$$2.\delta = M' (FR^2/EJ) (\text{sen } \phi/2 - 1/\pi) \, d\phi.$$

Cette équation peut être simplifiée, par l'application de règles trigonométriques classiques, dans l'expression suivante :

$$\delta = (FR^3/2EJ) (\pi \cos \theta/4 - 2/\pi)$$

qui devient :

$$\delta = k \, f(\theta)F$$

où :

$$k = R^3/2EJ$$
$$f(\theta) = \pi \cos \theta/4 - 2/\pi = 0,25 \, \pi \cos \theta - 2/\pi.$$

A partir de l'expression de δ ainsi obtenue, on peut calculer les déformations maximale (positive) δ$_{max}$ et minimale (négative) δ$_{min}$ de la bague, sachant que δ$_{max}$ correspond à l'angle θ = 0, à savoir aux points diamétralement opposés d'application de l'effort de déformation, alors que δ$_{min}$ correspond à l'angle θ = π/2. Cela étant, on peut donc écrire que :

$$\delta_{max} = K \, f(0) \, F = K \, F (\pi/4 - 2/\pi) =$$
$$= K \, F (\pi^2 - 8)/4\pi,$$

alors que :

$$\delta_{min} = K\, f(\pi/2)F = -\,2\,K\,F/\pi.$$

On peut également calculer le rapport entre les déformations maximale et minimale, qui est défini par l'expression suivante :

$$|\delta_{max}/\delta_{min}| = (\pi^2 - 8)/8 = \pi^2/8 - 1 =$$
$$\approx 0,234.$$

Dans les expressions précédentes E et J sont notoirement les symboles du module de Young du matériau dans lequel est réalisée la bague élastique et du moment d'inertie de la section de cette bague, respectivement ; dans le cas de section rectangulaire de dimensions t x a, telle qu'admise plus haut, on a pour J l'expression suivante :

$$J = at^3/12.$$

En choisissant les valeurs suivantes :

$$a = 5\ mm$$
$$t = 1\ mm$$
$$R = 30\ mm$$
$$E = 210\ N/mm^2,$$

la constante K a, dans ces conditions, la valeur indiquée ci-après :

$$K \approx 0,154\ mm/N.$$

On peut, en outre, calculer la valeur de $\theta = \alpha$ pour laquelle la déformation est nulle, à savoir pour laquelle :

$$f(\alpha) = 0,25\,\pi \cos\alpha - 2/\pi = 0$$

ce qui donne pour a la valeur suivante :

$$\alpha = \arccos(8/\pi^2) \approx 35,8\ degrés.$$

Cela étant, il est facile de vérifier que le mécanisme selon l'invention permet un réglage fin de l'orientation d'une charge utile. En effet, si on place les moyens de connexion de la plaque de support de la charge dans des points définis par un angle $\theta$ voisin de $\alpha$, par exemple :

$$\theta = 35\ degrés$$

on a

$$f(35) \approx 0,006740 = 6,740\cdot10^{-3}$$

et donc une déformation :

$$\delta(35) = K\, f(35)\, F \approx 1,038\cdot10^{-3}F$$

ce qui correspond à une déflexion d'environ 1 mm lorsqu'on applique un effort de déformation F = 1 N

A cette déflexion correspond, à son tour, la rotation $\beta$ de la plaque de support, (pour laquelle on admet une longueur L = 200 mm) donnée par :

$\beta = \arctan 2\delta/L \approx 5,94\cdot10^{-4}$ degrés $\approx 2,14''$, ce qui est une rotation très faible.

Ce calcul de $\beta$ s'applique au mécanisme de la figure 4, repris à cet effet à la figure 8 pour des raisons de clarté, à savoir dans le cas où la plaque subit uniquement une rotation, sans aucune translation, ce qui correspond à des déformations pour les deux bagues égales mais de sens opposés.

Bien entendu, dans le cas général où le mouvement de la plaque est un mouvement de roto-translation, dû au fait que les deux bagues subissent des déformations différentes $\delta'$ et $\delta''$, la rotation de cette plaque est fournie par l'expression suivante :

$$\beta = \arctan(\delta' - \delta'')/L$$

comme illustré à la figure 7.

On peut apprécier les performances du mécanisme de réglage conforme à l'invention en le comparant au mécanisme de pointage d'antenne MATRA APM-PA qui, comme déjà évoqué plus haut, et bien qu'il constitue le meilleur dispositif de ce genre connu dans l'état de la technique, ne permet d'atteindre qu'une précision de $2\cdot10^{-3}$ degrés, à savoir d'environ un ordre de grandeur plus petite par rapport à l'exemple précédent qui a donné la valeur $\beta \approx 5,14\cdot10^{-4}$ degrés.

D'ailleurs, cette dernière valeur ne doit pas être considérée comme étant la limite supérieur du mécanisme de réglage selon l'invention. En effet, on peut obtenir des angles de rotation beaucoup plus petits en choisissant des conditions de fonctionnement différentes, à savoir des valeurs appropriées pour les différents paramètres de construction.

A titre d'exemple, il suffit de calculer -les autres conditions étant identiques à celles de l'exemple décrit plus haut- l'angle de rotation $\beta$ correspondant à la fixation de la plaque de support à un point défini par l'angle $\theta$ = 35,5 degrés, donc encore plus proche de la valeur $\alpha$ = 35,8 degrés.

Dans ce cas, on a :

$$f(35,5) \approx 0,002785 = 2,785 \cdot 10^{-3}$$

et donc une déformation :

$$\delta(35,5) = K\, f(35,5)\, F \approx 4,289 \cdot 10^{-4} F$$

qui, pour F = 0,1N, est égale à :

$$\delta \approx 4,29 \cdot 10^{-5} mm.$$

Or, à cette déformation correspond une rotation de la plaque définie par l'angle:

$$\beta \approx 2,45 \cdot 10^{-5} \text{ degrés,}$$

à savoir par une valeur qui est d'environ deux ordres de grandeur plus petite que celle définissant les performances du meilleur mécanisme de pointage d'antenne développé à ce jour.

Bien entendu, la réalisation pratique d'un mécanisme de réglage ayant des performances aussi élevées dépend avant tout de la conception des moyens de connexion entre la plaque de support et la bague élastiquement déformable ainsi que du type d'actionneur adopté.

En outre, il faudrait minimiser l'influence des distorsions thermiques dues à une distribution non uniforme de la température de la bague par l'adoption de moyens appropriés faisant écran thermique et/ou isolation thermique.

A cause de la simplicité remarquable du mécanisme selon l'invention, nombreuses sont les applications terrestres et spatiales auxquelles se prête celui-ci.

De toutes façons, en raison des rotations extrêmement petites que l'on peut obtenir, les applications les plus intéressantes concernent les dispositifs optiques pour le réglage de l'orientation et/ou de la position de miroirs et lentilles.

Bien entendu, le mécanisme selon l'invention peut être également utilisé pour effectuer le pointage d'antenne.

Ci-après, on indique certains exemples d'applications spatiales :

- comme mécanisme de pointage fin pour dévier des faisceaux lumineux et réaliser ainsi des liaisons optiques entre satellites, notamment par faisceaux lasers.

Ceci peut être intéressant pour le pointage de charges utiles (notamment constituées par des appareillages scientifiques) embarquées sur des satellites, en particulier sur les satellites SAT-2 ou DRS dans le cadre du programme SILEX : en effet, en plus d'un mécanisme de réglage grossier du grand angle qui actionne le télescope qui y est embarqué, on a également besoin de mécanismes de pointage fins pour la poursuite d'une cible sur écran. Or, dans ce cas on a besoin d'une précision très élevée, de l'ordre de $5 \cdot 10^{-3}$ degrés, pour localiser la cible, ce qui est facilement atteint par le mécanisme selon l'invention ;

- comme mécanisme de pointage fin à anticipation qui demande une précision extrêmement élevée, de l'ordre de $1 \cdot 10^{-3}$ degrés, à l'intérieur d'un intervalle angulaire très petit de 0,33 degré, ce qui fait également partie du programme SILEX évoqué plus haut.

Ainsi que cela ressort de ce qui précède, l'invention ne se limite nullement à ceux de ses modes de mise en oeuvre de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention telle que définie dans les revendications suivantes.

**Revendications**

1. Mécanisme de réglage fin de l'orientation et/ou de la position d'une charge utile, comprenant :
   - un moyen de support (15 ; 15ª) de la charge,
   - des moyens élastiquement déformables (10) à symétrie circulaire à l'état non déformé,
   - des moyens de déformation (11) de ces moyens élastiques (10),
   - des moyens de connexion (20 ; 20ª) du moyen de support (15 ; 15ª) de la charge aux moyens élastiques (10), permettant de communiquer les déformations de ces derniers au moyen de support et donc à la charge, lequel mécanisme est caractérisé en ce que :
   - les moyens élastiques sont constitués par au moins une bague continue (10) ayant un rayon (R), une épaisseur radiale (t) et une largeur axiale (a) prédéterminés,
   - le moyen de support (15 ; 15ª) de la charge est disposé, par rapport à la bague (10), de manière à transformer les déformations de celle-ci en rotations ou roto-translations de ce moyen de support,
   - les moyens de déformation (11) de la bague (10), qui font passer celle-ci de l'état non déformé à l'état déformé, sont aptes à appliquer directement un effort de déformation (F) à cette bague, dirigé vers l'extérieur, contemporainément en deux points diamétralement opposés ($P_M$) de la bague (10) définissant une ligne d'action (x-x) diamétrale de ses moyens de déformation (11), ladite bague (10) présentant des points singuliers ($P_o$) qui restent sensiblement fixes lorsqu'elle passe de l'état non

7

déformé à l'état déformé et dont la distribution sur la bague (10) est fonction de l'orientation de la ligne d'action diamétrale (x-x) des moyens de déformation (11) par rapport à un diamètre de référence de la bague passant par le point d'emplacement desdits moyens de connexion sur celle-ci,

- il comporte en outre des moyens de variation (14), dans des limites préfixées, de l'orientation de la ligne d'action diamétrale (x-x) des moyens de déformation (11) de la bague (10), et donc de variation de la distribution desdits points sensiblement fixes ($P_o$) de cette bague, en sorte que le point d'emplacement des moyens de connexion coïncide avec des positions variables entre des positions voisines et des positions éloignées desdits points sensiblement fixes ($P_o$) de la bague (10), des déformations de cette bague correspondant à ces positions et permettant un réglage, respectivement fin et grossier, du moyen de support (15 ; 15$\underline{a}$) de la charge utile et donc de cette dernière.

2.  Mécanisme selon la revendication 1, caractérisé en ce que les moyens de déformation sont constitués par un actionneur à double effet (11) disposé à l'intérieur de la bague élastique (10), en sorte qu'il prend appui contre deux point diamétralement opposés ($P_M$) de la surface interne de la bague.

3.  Mécanisme selon les revendications 1 et 2, caractérisé en ce que les moyens élastiquement déformables sont constitués par deux bagues (10), à l'intérieur de chacune desquelles est disposé un actionneur (11) du type susdit, ces deux actionneurs étant reliés à une structure fixe (19) par l'intermédiaire d'une liaison rigide (21) qui rend solidaires entre eux les deux actionneurs (11), le moyen de support de la charge étant constitué par une plaque (15a) fixée par deux côtés opposés aux deux bagues (10).

4.  Mécanisme selon l'une quelconque des revendications 1 ou 2, caractérisé en ce que les moyens élastiquement déformables sont constitués par une bague unique (10), à l'intérieur de laquelle est disposé l'actionneur précité (11), le moyen de support étant constitué par une plaque (15) dont un côté est fixé à la bague (10), alors que l'autre côté pivote, par rapport à une structure fixe (19), autour d'une articulation flexible (18).

5.  Mécanisme selon la revendication 4, caractérisé en ce que les moyens de variation de l'orientation de la ligne d'action diamétrale (x-x) des moyens de déformation (11) de la bague (10) comprennent un moteur pas-à-pas (14) qui entraîne solidairement l'actionneur (11) et la bague (10), les moyens de connexion (20) étant propres à permettre que la bague (10) glisse librement par rapport à la plaque de support (15).


**Patentansprüche**

1.  Steuerungsmechanismus zur Feineinstellung der Ausrichtung und/oder der Position einer Zuladung, der aufweist:
    - ein Mittel (15, 15ª) zum Halten der Zuladung,
    - elastisch deformierbare Mittel (10), die im nicht deformierten Zustand kreissymmetrisch sind,
    - Mittel (11) zum Deformieren dieser elastischen Mittel (10),
    - Mittel (20, 20ª) zum Werbinden des Mittels (15, 15ª) zum Halten der Ladung mit den elastischen Mitteln (10), welche ein Übertragen der Deformationen dieser Letztgenannten an die Halterungsmittel und folglich an die Ladung ermöglichen, wobei dieser Mechanismus, **dadurch gekennzeichnet ist, daß:**
    - die elastischen Mittel aus zumindest einem durchgehenden Ring (10) gebildet werden, der einen vorbestimmten Radius (R), eine vorbestimmte radiale Stärke (t) und eine vorbestimmte axiale Breite (a) besitzt,
    - die Mittel (15, 15a) zum Halten der Ladung bezüglich des Ringes (10) in der Weise angeordnet sind, daß die Deformationen desselben in Dreh- oder Translations-Drehbewegungen des Halterungsmittels umgewandelt werden,
    - die Mittel (11) zum Deformieren des Ringes (10), die diesen von dem undeformierten in den deformierten Zustand verwandeln, dazu vorgesehen sind, auf diesen Ring eine direkte Deformationskraft (F) auszuüben, die gleichzeitig an zwei diametral gegenüberliegenden Punken ($P_M$) des Ringes (10) nach außen wirkt und eine diametrale Wirkungsgerade (x-x) seiner Deformationsmittel (11) festlegt, wobei dieser Ring (10) einzelne Punkte ($P_O$) aufweist, die im wesentlichen fest bleiben, wenn er von dem undeformierten in den deformierten Zustand gebracht wird, und deren Aufteilung entlang des Ringes (10) von der Ausrichtung der diametralen Wirkungsgerade (x-x) der Deformationsmittel (11) bezüglich eines Referenzdurchmessers des Ringes abhängig ist, welcher durch die Anbringstelle der genannten Werbindungsmittel führt.

- er überdies Mittel (14) zum Verändern der Ausrichtung der Wirkungsgerade (x-x) der Mittel (10) zur Deformation des Ringes (11) innerhalb vorgegebener Grenzen und folglich zum Verändern der Werteilung dieser im wesentlichen festen Punkte ($P_O$) dieses Ringes aufweist, sodaß die Anbringstelle für die Werbindungsmittel mit veränderbaren Positionen übereinstimmt, die zwischen Positionen liegen, welche nahe oder entfernt von diesen im wesentlichen festen Punkten ($P_O$) des Ringes (10) sind, wobei Deformationen dieses Ringes mit diesen Positionen in Zusammenhang stehen und eine Grob- bzw. Feineinstellung des Mittels (15, 15$^a$) zum Halten der Zuladung und folglich dieser letzteren ermöglichen.

2. Mechanismus nach Anspruch 1, **dadurch gekennzeichnet, daß** die Deformationsmittel aus einer zweifach wirkenden Betätigung (11) bestehen, die so im Inneren des elastischen Ringes (10) angeordnet ist, daß sie an zwei diametral gegenüber liegenden Punkten ($P_M$) an der Innenfläche des Ringes abgestützt ist.

3. Mechanismus nach den Ansprüchen 1 und 2, **dadurch gekennzeichnet, daß** die elastisch deformierbaren Mittel aus zwei Ringen (10) bestehen, bei welchen im Inneren je eine Betätigung (11) der genannten Art angeordnet ist, wobei diese zwei Betätigungen unter Zwischenschaltung einer starren Werbindung (21), welche die zwei Betätigungen (11) untereinander verbindet, mit einem festen Gebilde (19) verbunden sind, und das Mittel zum Halten der Ladung aus einer Platte (15$^a$) besteht, die an zwei gegenüberliegenden Seiten an den zwei Ringen (10) fixiert ist.

4. Mechanismus nach einem der Ansprüche 1 oder 2, **dadurch gekennzeichnet, daß** die elastisch deformierbaren Mittel aus einem einzelnen Ring (10) bestehen, bei welchem in Inneren die genannte Betätigung (11) angeordnet ist, wobei das Halterungsmittel aus einer Platte (15) besteht, deren eine Seite an dem Ring (10) fixiert ist, wogegen die andere Seite bezüglich eines festen Gebildes (19) um ein bewegliches Gelenk (18) schwenkbar ist.

5. Mechanismus nach Anspruch 4, **dadurch gekennzeichnet, daß** die Mittel zum Verändern der Ausrichtung der diametralen Wirkungsgerade (x-x) der Mittel (11) zur Deformation des Ringes (10) einen Schrittmotor (14) aufweisen, welcher gemeinsam die Betätigung (11) und den Ring (10) antreibt, wobei die Werbindungsmittel (20) ein freies Gleiten des Ringes (10) bezüglich der Halterungsplatte (15) ermöglichen.

## Claims

1. Mechanism for the fine adjustment of the orientation and/or position of a useful load, comprising:
   - means (15, 15a) for supporting the load,
   - elastically deformable means (10) having circular symmetry in the undeformed state,
   - means (11) for the deformation of these elastic means (10),
   - means (20, 20a) for connecting the means (15, 15a) supporting the load to the elastic means (10) with the result that the deformations of the latter are communicated to the supporting means and therefore to the load, this mechanism being characterised in that:
   - the elastic means comprise at least one continuous ring (10) having a predetermined radius (R), radial thickness (t) and axial width (a),
   - the means (15, 15a) supporting the load is arranged in relation to ring (10) in such a way that the deformations in thelatter are transformed into rotations or rotational and translational movements of this supporting means,
   - the means (11) for deforming the ring (10) which cause the latter to change from the undeformed state to the deformed state are such as to apply a deformation force (F) directly to this ring, directed outwards, simultaneously at two dimetrically opposite points ($P_m$) on the ring (10) defining a diametrial line of action (x-x) for its deformation means (11), the said ring (10) having individual points ($P_o$) which remain substantially fixed when it changes from the undeformed state to the deformed state and whose distribution over the ring (10) depend on the orientation of the diametral line of action (x-x) of the deformation means (11) with reference to a reference diameter of the ring passing through the point at which the said connection means are located on it,
   - it also includes means (14) for varying the orientation of the diametral line of action (x-x) of the means (11) for deforming ring (10), within predetermined limits, and therfore for varying the distribution of the said substantially fixed points (P$_o$) on this ring in such a way that the point at which the means of connection are located coincides with variable positions between positions which are close to and at a distance from the said substantially fixed points (P$_o$) on the ring (10), the deformations of this ring corresponding to these positions and permitting fine and coarse adjustment of the means (15, 15a) supporting the useful load and therefore of the latter respectively.

2. A mechanism according to claim 1, characterised in that the deformation means comprise a double-acting activator (11) located within the elastic ring (10) so that it bears against two diametrically opposite points (P$_M$) on the inner surface of the ring.

3. A mechanism according to claims 1 and 2, characterised in that the elastically deformable means comprise two rings (10) within each of which is located an activator (11) of the aforesaid type, these two activators being connected to a fixed structure (19) through the intermediary of the ridgid link (21) which makes the two activators (11) integral with each other, the means for supporting the load comprising a plate (15a) fixed to the two rings (10) on two opposing sides.

4. A mechanism according to either of claims 1 or 2, characterised in that the elastically deformable means comprise a single ring (10) within which the aforesaid activator (11) is located, the supporting means comprising a plate (15) of which one side is fixed to the ring (10) while the other side pivots with respect to a fixed structure (19) about a flexible joint (18).

5. A mechanism according to claim 4, characterised in that the means for varying the orientation of the diametral line of action (x-x) of the means (11) for deforming the ring (10) comprise a stepping motor (14) which drives the activator (11) and the ring (10) together as one, the connection means (20) being such as to allow the ring (10) to slide freely with respect to the supporting plate (15).

FIG.1

FIG.4

FIG.5

FIG.2

FIG.3

FIG.6

FIG.7

FIG.8

FIG.9

FIG.10

FIG.11